# EUROPÄISCHE PATENTANMELDUNG

(11) **EP 4 431 870 A1**
(43) Veröffentlichungstag der Anmeldung: **18.09.2024**
(21) Anmeldenummer: 24162669.6
(22) Anmeldetag: 11.03.2024
(51) Int. Cl.: G01B 21/04

(54) **MESSHÜLSE FÜR EINE WERKZEUGVERMESSUNG**

(30) Priorität: 17.03.2023 DE 102023106799
(71) Anmelder: Franz Haimer Maschinenbau KG, 86568 Hollenbach-Igenhausen (DE)
(72) Erfinder: Stoffels, Olaf, 33415 Verl (DE); Nisar, Shakeel, 33689 Bielefeld (DE); Ziegltrum, Franz, 86568 Hollenbach-Igenhausen (DE)
(74) Vertreter: Schwarz, Wolfgang

(57) **Zusammenfassung**

Die Erfindung betrifft eine **Messhülse** zum Vermessen eines Werkzeuges, ein **Werkzeugvoreinstellgerät,** ein **Verfahren** zum Vermessen eines Werkzeugs mittels eines Werkzeugvoreinstellgeräts und ein **Verfahren** zum Montieren eines Werkzeugs in einem Werkzeughalter.

Die **Messhülse** 1 zum Vermessen eines Werkzeuges 2 sieht einen, insbesondere hülsenförmigen, Grundkörper 6 mit einer von einer ersten Stirnseite 7 der Messhülse 1 beginnend in Axialrichtung 8 der Messhülse 1 verlaufenden Ausnehmung 9 mit sich stufenförmig verkleinernden, insbesondere kreisförmigen, Querschnitten 10 zum Aufnehmen eines zu vermessenden Werkzeugs 2 vor.

Das **Werkzeugvoreinstellgerät** 3 sowie die **Verfahren** sehen die **Messhülse** 1 vor.

## Beschreibung

Die Erfindung betrifft eine **Messhülse** zum Vermessen eines Werkzeuges, ein **Werkzeugvoreinstellgerät,** ein **Verfahren** zum Vermessen eines Werkzeugs mittels eines Werkzeugvoreinstellgeräts und ein **Verfahren** zum Montieren eines Werkzeugs in einem Werkzeughalter.

Es ist bekannt, Werkzeuge, wie Rotationswerkzeuge, insbesondere Fräs- oder Bohrwerkzeuge, in vorgegebenen SollPositionen in Werkzeugaufnahmen zu spannen, in welchen das Werkzeug eine bestimmte (axiale) Ausspannlänge bezüglich der Werkzeugaufnahme aufweist bzw. aufweisen soll.

Dazu ist das Wissen über die (genaue) axiale Länge des Werkzeugs hilfreich bzw. notwendig.

Im Stand der Technik sind verschiedene Verfahren und Vorrichtungen zum Vermessen von Werkzeugen, im Speziellen zum Vermessen einer axialen Länge eines Werkzeugs, bekannt.

Die DE 103 17 576 A1 zum Beispiel beschreibt ein Längenmessmodul, mit dessen Hilfe die (axiale) Länge eines Rotationswerkzeugs (vor dem Einspannen) gemessen werden kann. Das Längenmessmodul hat hierzu ein Messstativ mit einem an einer Führung verschiebbaren mechanischen Messglied.

Es ist Aufgabe der Erfindung, ein Verfahren und /oder eine Vorrichtung anzugeben, mittels welchem bzw. welcher ein Werkzeug, insbesondere dessen axiale Länge, einfach und kostengünstig vermessen werden kann.

Diese Aufgabe wird gelöst durch eine **Messhülse** zum Vermessen eines Werkzeuges, ein **Werkzeugvoreinstellgerät,** ein **Verfahren** zum Vermessen eines Werkzeugs mittels eines Werkzeugvoreinstellgeräts und ein **Verfahren** zum Montieren eines Werkzeugs in einem Werkzeughalter mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf die **Messhülse** und das W**erkzeugvoreinstellgerät** wie auch auf die **Verfahren.**

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Unter "Vermessen (eines Werkzeugs)" kann verstanden werden, dass zumindest eine geometrische Information des Werkzeugs durch den Messvorgang erlangt wird. Insbesondere kann hier vorgesehen sein, das eine axiale Länge eines Werkzeugs vermessen wird. Durchmesser, Radien und Ähnliches können auch bei einem Werkzeug gemessen bzw. vermessen werden.

Als zu vermessendes Werkzeug kann hier ein Bearbeitungswerkzeug, insbesondere ein rotationssymmetrisches Bearbeitungswerkzeug bzw. Rotationswerkzeug, wie insbesondere ein Fräswerkzeug (oder auch Bohrwerkzeug) oder ein zur Fräsbearbeitung geeignetes bzw. genutztes Werkzeug oder ein Drehwerkzeug, gemeint sein. Bestimmte Werkzeuge, die zur Drehbearbeitung genutzt werden, können auch vermessen werden.

Die **Messhülse** zum Vermessen eines Werkzeuges (Referenzhülse/universelle Messhülse) sieht einen, insbesondere hülsenförmigen, Grundkörper mit einer von einer ersten Stirnseite der Messhülse beginnend in Axialrichtung der Messhülse verlaufenden Ausnehmung mit sich stufenförmig verkleinernden, insbesondere kreisförmigen, Querschnitten zum Aufnehmen eines zu vermessenden Werkzeugs vor.

Vereinfacht und anschaulich ausgedrückt, die für die Aufnahme eines zu vermessenden Werkzeugs vorgesehene stufenförmige Ausnehmung (in der Messhülse) wird von "oben nach unten" (stufenförmig) immer enger -, so dass durchmesserkleinere, zu vermessende Werkzeuge - bis auf "ihre" Stufe - weiter nach unten in die Ausnehmung eintauchen als durchmessergrößere. "Ihre Stufe" meint dabei diejenige Stufe, deren Querschnitt gerademal größer ist als der Durchmesser des zu vermessenden Werkzeugs. Der Querschnitt der unmittelbar unter "dieser ihren Stufe" darunterliegenden Ausnehmungsstufe wäre so gerade zu klein, um das zu vermessende Werkzeug hier aufzunehmen.

Insbesondere fertigungstechnisch - und auch in Ansehung von Rotationswerkzeugen - zweckmäßig erscheint es dabei, wenn die Ausnehmung im Bereich einer Stufe mit gleichem Querschnitt im Wesentlichen kreisscheibenförmig ausgebildet ist.

Darüber hinaus kann auch vorgesehen sein, dass die Querschnitte der, insbesondere kreisscheibenförmigen, Ausnehmungsstufen entsprechend von Durchmessern von Werkzeugen bestimmt und/oder angepasst sind, kann dies insbesondere dafür sorgen, dass in der Ausnehmung aufgenommene, zu vermessende Werkzeuge geringe Kippneigung zeigen.

Nach einer besonderen zweckmäßigen Ausführung ist vorgesehen, dass die, insbesondere kreisscheibenförmigen, Ausnehmungsstufen jeweils konzentrisch zu einer Mittelachse der Messhülse angeordnet sind. Vereinfacht und anschaulich ausgedrückt, die Ausnehmung bildet hier einen auf den Kopf stehenden, geraden Stufenkegel aus.

Besonders zweckmäßig erscheint hier weiter, wenn die Messhülse ausgebildet ist mit einem, insbesondere sich radial durch die Messhülse hindurch erstreckenden und/oder insbesondere durch eine Mittelachse der Messhülse verlaufenden, Durchlichtschlitz, welcher sich von der ersten Stirnseite der Messhülse beginnend in Axialrichtung der Messhülse zumindest über den Bereich der, insbesondere konzentrisch zu einer Mittelachse in der Messhülse angeordneten, Ausnehmung erstreckt.

Wird so der Durchlichtschlitz mit einem Strahlungsmedium, beispielsweise Licht, beispielsweise eines optischen Messsystems bei einem Voreinstellgerät, bestrahlt/-leuchtet bzw. durchstrahlt/-leuchtet, so kann dadurch insbesondere bestimmt werden, wo ein zu vermessendes Werkzeug in der Messhülse bzw. in dortiger Ausnehmung positioniert ist. Insbesondere eine untere Stirnseite des in der Ausnehmung positionierten, zu vermessenden Werkzeug lässt sich so (bei der Vermessung des Werkzeugs) ermitteln.

Auch kann ausführungsgemäß vorgesehen sein, dass die, insbesondere kreisscheibenförmigen, Ausnehmungsstufen jeweils derart exzentrisch zu einer Mittelachse der Messhülse verschoben angeordnet sind, dass die Ausnehmungsstufen eine gemeinsame Mantellinie ausbilden und/oder die Mittelachsen der Ausnehmungsstufen in einer gemeinsamen Ebene liegen.

Vereinfacht und anschaulich ausgedrückt, (wohingegen im Falle der besagten zu der Mittelachse der Messhülse konzentrischen Ausnehmungsstufen die Ausnehmung einen geraden Stufenkegel bildet) bildet hier die Ausnehmung einen auf den Kopf stehenden, schiefen Stufenkegel aus.

Eine besonders - fertigungs- und anwendungstechnisch - zweckmäßig Form und Lage (in der Messhülse) erlangt die Ausnehmung, wenn die, insbesondere kreisscheibenförmigen, Ausnehmungsstufen jeweils derart exzentrisch zu einer Mittelachse der Messhülse verschoben angeordnet sind, dass die gemeinsame Mantellinie parallel zu der Mittelachse der Messhülse angeordnet ist, wobei insbesondere ein Abstand zwischen der gemeinsamen Mantellinie und der Mittelachse im Wesentlichen gleich ist wie ein Abstand zwischen der Mittelachse der Messhülse und einer zu der gemeinsamen Mantellinie parallelen Mantellinie der Messhülse.

Besonders zweckmäßig erscheint hier weiter, wenn die Messhülse weiter ausgebildet ist mit einem, insbesondere einstückig abtragbaren, Materialabtrag, welcher Materialabtrag sich von der ersten Stirnseite der Messhülse beginnend in Axialrichtung der Messhülse zumindest über den Bereich der Ausnehmung erstreckt und derart ausgebildet ist, dass die Ausnehmungsstufen nach abgetragenem Material im Umfangsrichtung nicht vollständig durch Messhülsenmaterial umgeben sind.

Im Unterschied zu besagter Messhülse mit besagtem geraden Stufenkegel, kann sich bei einer Messhülse mit besagtem schiefen Stufenkegel und beschriebenen Materialabtrag von Vorteil erweisen, dass - insbesondere im Falle von (durchmesser-/längen-)kleinen, zu vermessenden (Rotations-)Werkzeugen - diese sich leichter wieder der Ausnehmung der Messhülse entnehmen lassen, weil sie wegen der Kegelform bzw. Form der Ausnehmung und dem bzw. in Kombination mit dem besagten Materialabtrag (d.h., einer freien Zugänglichkeit an den Stellen des Materialabtrags an den Ausnehmungsstufen bzw. an der Ausnehmungsstufe, der nicht durch Messhülsenmaterial umgeben ist, von außen) leichter zugänglich sind, als solche in der Ausnehmung im Falle des geraden Stufenkegels. Dort können gegebenenfalls (durchmesser-/längen-)kleine, zu vermessende (Rotations-)Werkzeuge derart weit in die Ausnehmung eintauschen, dass sie unter Umständen nicht mehr von oben greifbar sind.

(Funktions-)Ähnlich dem besagten Durchlichtschlitz (im Falle des besagten geraden Stufenkegels in der Messhülse) kann so auch hier - wird die (ein zu vermessendes Werkzeug aufnehmende) Messhülse im Bereich ihres Materialabtrags mit einem Strahlungsmedium, beispielsweise Licht, beispielsweise eines optischen Messsystems bei einem Voreinstellgerät, bestrahlt/- leuchtet - bestimmt werden, wo ein zu vermessendes Werkzeug in der Messhülse bzw. in dortiger Ausnehmung positioniert ist. Insbesondere eine untere Stirnseite des in der Ausnehmung positionierten, zu vermessenden Werkzeug lässt sich so auch hier (bei der Vermessung des Werkzeugs) ermitteln.

Insbesondere - um einen sicheren "Stand" eines zu vermessenden Werkzeugs in der Ausnehmung zu gewährleisten bzw. ein Kippen eines zu vermessenden Werkzeugs zu verhindern - zweckmäßig erscheint es hier, wenn der Bereich einer Ausnehmungsstufe, der nicht durch Messhülsenmaterial umgeben ist, ein Kreisscheibensektor mit einem Mittelpunktswinkel kleiner 180°, insbesondere kleiner 150°, insbesondere kleiner 130°, insbesondere in einem Bereich von [30°, 180°], [30°, 150°], [30°, 130°], [45°, 180°], [45°, 150°] oder [45°, 130°], ist und/oder der, insbesondere einstückig abtragbare, Materialabtrag gegenüber der Mittellinie der Messhülse unter einem Winkel von ca. 5° geneigt abgetragen ist.

Ferner kann es weiter auch zweckmäßig sein, wenn die Messhülse aus Metall, insbesondere rostfreiem Stahl, insbesondere Einsatz- oder Edelstahl, ist. Auch nicht metallische Werkstoffe können zum Einsatz kommen. So kann die Messhülse beispielsweise aus einem thermoplastischen Werkstoff, wie aus Polyoxymethylen (POM), - oder anderen zweckmäßigen Materialien sein. Gegebenenfalls kann die Messhülse auch beschichtet sein.

Die Messhülse kann insbesondere zylindrisch, aber gegebenenfalls auch eckig sein.

Das **Werkzeugvoreinstellgerät** sieht die besagte **Messhülse** vor.

Dabei mag es nach einer Weiterbildung zweckmäßig sein, wenn es sich bei dem besagten Werkzeugvoreinstellgerät um ein kombiniertes Voreinstell- und Schrumpfgerät handelt.

Damit wird es möglich, dass Werkzeuge mittels des optischen Messsystems des Werkzeugvoreinstellgerätes - in dem Werkzeugvoreinstellgerät - vermessen werden können (, ohne, dass es hierfür andere Messgeräte und/oder Messörtlichkeiten bedarf). Diese Messergebnisse aus dieser Werkzeugvermessung liegen so dann auch zu Ergebnissen aus einer Voreinstellung (in dem Voreinstellgerät) vor.

Nach einer ausführungsgemäßen Weiterbildung ist es so insbesondere zweckmäßig, wenn das Voreinstellgerät aufweist ein Messsystem, insbesondere ein optisches Messsystem und/oder ein mechanisches Messsystem, und einen auswählbaren Positionsort für die Messhülse, welcher derart auswählbar ist, dass die Ausnehmung einer an dem auswählbaren Positionsort positionierten Messhülse durch das, gegebenenfalls in einem Messbereich bewegbare, Messsystem erfassbar, insbesondere durch das optische Messsystem fokussierbar, ist.

Insbesondere zweckmäßig erscheint es auch, wenn der Positionsort für die Messhülse im Bereich bzw. nahe bzw. in unmittelbarer Nähe einer Spindel bei dem Voreinstellgerät ist.

Bei dem **Verfahren** zum Vermessen eines Werkzeugs mittels des besagten Werkzeugvoreinstellgeräts (mit einem optischen Messsystem zum Vermessen von Werkzeugen und der besagten Messhülse) ist vorgesehen, dass ein in der Messhülse bzw. in der Ausnehmung der Messhülse angeordnetes Werkzeug unter Verwendung des optischen Messsystems vermessen wird.

Als zweckmäßig hat es sich dabei erwiesen, wenn die Messhülse an einem auswählbaren Positionsort bei dem Werkzeugvoreinstellgerät positioniert wird, das zu vermessende Werkzeug in der Ausnehmung der Messhülse positioniert wird, das optische Messsystem des Werkzeugvoreinstellgeräts gegebenenfalls in eine Messposition bewegt wird, in welcher die Ausnehmung der Messhülse fokussierbar ist, das in der Ausnehmung der Messhülse positionierte Werkzeug unter Verwendung des optischen Messsystems fokussiert und vermessen wird.

Die Vermessung des Werkzeuges kann dadurch geschehen, dass nacheinander Schaftende und Spitze (oder umgekehrt) des Werkzeuges mit dem Messsystem erfasst werden und aus den beiden Positionen die Länge des Werkzeuges berechnet wird.

Bevorzugt können aber auch die Positionen der einzelnen Ausnehmungsstufen vorab bestimmt und in einem Datenspeicher hinterlegt werden. In diesem Fall reicht es aus, bei der Vermessung des Werkzeuges nur noch dessen Spitze mit dem Messsystem zu erfassen.

Bei dem **Verfahren** zum Montieren eines Werkzeugs in einem Werkzeughalter ist vorgesehen, dass ein Werkzeug nach besagtem Verfahren vermessen wird, insbesondere eine axiale Werkzeuglänge des Werkzeugs gemessen wird, ein Anschlagselement im Werkzeughalter unter Verwendung des Messergebnisses, insbesondere der axialen Länge, positioniert wird, das Werkzeug auf Anschlag an das Anschlagselement in den Werkzeughalter eingeführt wird und das Werkzeug in der eingeführten Position im Werkzeughalter befestigt wird.

Hier erscheint es insbesondere zweckmäßig, wenn das Montageverfahren in einem kombinierten Werkzeugvoreinstell- und Schrumpfgerät durchgeführt wird.

Es versteht sich, dass sich die besagte Vorrichtung und die besagten Verfahren für beliebige Werkzeughalter, so insbesondere für Schrumpfaufnahmen, aber auch Spannzangenfutter und Hydrodehnspannfutter, anwenden lassen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein kombiniertes Voreinstell- und Schrumpfgerät mit einer Messhülse zur Vermessung eines Werkzeugs gemäß einer Ausführung;
- FIG 2: einen Detailausschnitt des kombinierten Voreinstell- und Schrumpfgerät nach FIG 1 - mit Verdeutlichung einer geeigneten Position für die Messhülse;
- FIG 3: eine Messhülse zur Vermessung eines Werkzeugs gemäß einer Ausführung (FIGen 3a bis 3e);
- FIG 4: (im Schnitt) eine Messhülse zur Vermessung eines Werkzeugs gemäß einer weiteren Ausführung.

### Werkzeugvoreinstellung mit Werkzeuglängenmessung (FIGen 1 bis 4)

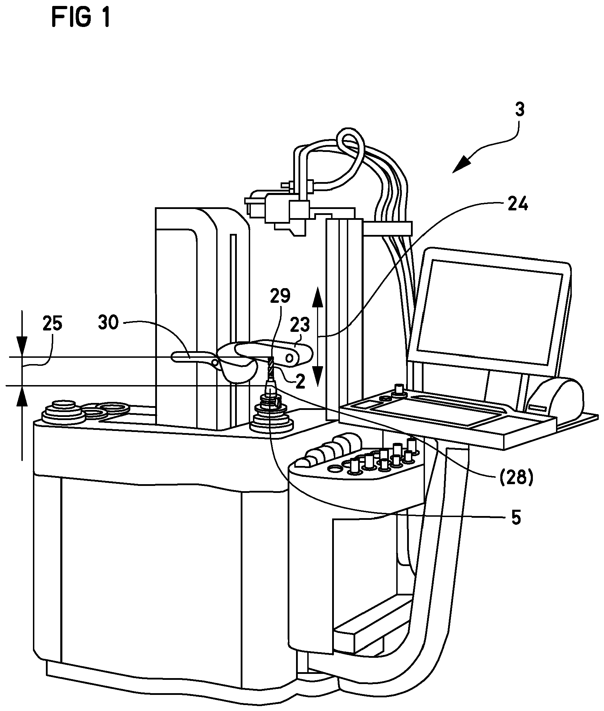

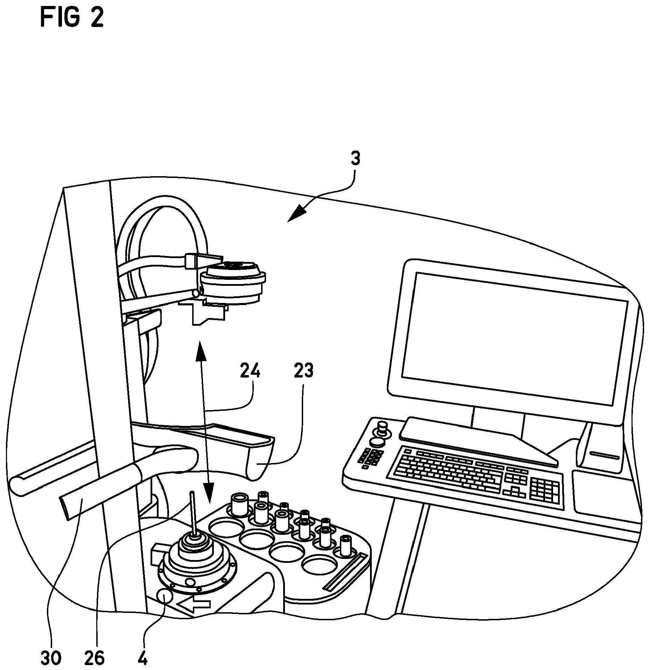

FIG 1 zeigt ein kombiniertes Voreinstell- und Schrumpfgerät 3. FIG 2 zeigt einen Detailausschnitt dieses Voreinstell- und Schrumpfgerät 3 - mit Verdeutlichung einer Position 4 einer Messhülse 1 für eine Vermessung eines Werkzeugs 2 in dem Voreinstell- und Schrumpfgerät 3. FIGen 3 und 4 zeigen verschiedene Ausführungen für eine solche Messhülse 1 zur Vermessung eines Werkzeugs 2.

FIG 1 zeigt das kombinierte Voreinstell- und Schrumpfgerät 3, wie es - in seinen Grundfunktionen, "Voreinstellen" und "Schrumpfen", - üblich (und bekannt) ist (beispielsweise aus: https://www.haimer.de/produkte/voreinstelltechnik/voreinstell geraete-der-vio-baureihe/vio-linear-toolshrink.html, erhältlich dort am 07.02.2023).

Dieses kombinierte Voreinstell- und Schrumpfgerät 3 (kurz im Folgenden vereinfacht nur Voreinstellgerät 3) sieht als weitere Funktion (des Voreinstellgeräts 3) eine Werkzeugvermessung vor, bei welcher (beispielsweise vor einer Voreinstellung und/oder einem Einschrumpfen eines Werkzeugs 2 in eine Werkzeugaufnahme 5 durch das Voreinstellgerät 3) eine Vermessung des Werkzeugs 2 - unter Verwendung der erwähnten Messhülse 1 - erfolgen kann.

Bei dieser Vermessung kann die axiale Länge 25 eines Werkzeugs 2, hier ein Rotationswerkzeug 2, wie ein Fräswerkzeug 2, gemessen - und anschließend die gemessene axiale Länge 25 des Werkzeugs 2 bei der Voreinstellung bzw. bei dem Einschrumpfen (des vermessenen Werkzeugs 1 in eine Werkzeugaufnahme 5) verwendet - werden.

Das Messgerät 23, welches diese Vermessung durchführt, ist, wie FIG 1 und insbesondere FIG 2 zeigen, dasjenige optische Messgerät 23, welches das Voreinstellgerät 3 sowieso schon vorsieht und welches bei dem Voreinstellgerät 3 die Voreinstellung (bzw. diesbezüglich Messung an einem Werkzeug 2) durchführt.

Um ein (Rotations-)Werkzeug 2 bzw. ein Fräswerkzeug 2 zu vermessen bzw. deren axiale Länge 25 zu bestimmen, wird, wie FIG 2 verdeutlicht, eine bzw. die besagte (hier metallische) Messhülse 1 (vgl. FIGen 3 und 4), unter Verwendung derer die Messung mittels des Messgerätes 23 des Voreinstellgerätes 3 durchgeführt wird, an einer in einem Messbereich 24, welcher durch das Messgerät 23 des Voreinstellgerätes 3 angefahren werden kann, liegenden Position 4 platziert - und zwar derart, dass eine Öffnung 27 einer Ausnehmung 9 in der Messhülse 1 nach oben zeigt.

Bei der Messung wird dann das zu vermessende (Rotations-)Werkzeug 2 in die Ausnehmung 9 der Messhülse 1 eingeführt/- geschoben - und zwar mit seiner schaftseitigen Stirnfläche 28 nach unten.

Das zu vermessende (Rotations-)Werkzeug 2 taucht dabei soweit in die Ausnehmung 9 ein, bis ihre schaftseitige Stirnfläche 28 an einer - im Späteren im Detail beschriebenen - Stufe 11 in der Ausnehmung 9 zu liegen kommt - und so nicht weiter in die Ausnehmung 9 eintaucht. Dabei überragt gegebenenfalls - in Abhängigkeit der Eintauchtiefe des zu vermessenden (Rota-tions-)Werkzeugs 2 und seiner axialen Länge 25 - die schneidenseitige Stirnfläche 29 des zu vermessenden (Rotations-)Werkzeugs 2 die Messhülse 1 nach oben - oder nicht.

Vereinfacht ausgedrückt, gegebenenfalls wird das zu vermessende (Rotations-)Werkzeug 2 aus der Ausnehmung 9 der Messhülse 1 herausschauen oder nicht.

Bei der Vermessung des (Rotations)Werkzeugs 2 bzw. der Messung seiner axialen Länge 25 wird nun das Messsystem 23 - mittels seines Trägersystems 30 - derart zu der Messhülse 1 hin verschoben, dass das Messfeld des Messsystems 23 die Messhülse 1 mit dem in der Messhülse 1 bzw. deren Ausnehmung 9 positionierten (Rotations-)Werkzeug 2 erfassen und so (hier optisch) vermessen bzw. zumindest dessen axiale Position bestimmen kann.

Sieht die Ausgestaltung der Messhülse 1, wie im Späteren anhand der FIGen 3 und 4 beschrieben werden soll, vor, dass die schaftseitige Stirnseite 28 des zu vermessenden (Rotations-)Werkzeugs 2 - , weil zumindest teilweise freiliegend, - durch das Messsystem 23 (optisch) erfassbar ist, wie auch, dass die schneidenseitige Stirnseite 29 des zu vermessenden (Rotations-)Werkzeug 2 ebenfalls - , weil auch zumindest teilweise freiliegend, - (optisch) erfassbar ist, kann das Messsystem 23 - aus den so erfassbaren beiden axialen Enden 28, 29 des zu vermessenden (Rotations-)Werkzeugs 2 dessen axiale Länge 25 bestimmen.

Der Messwert, d.h. die (axiale) Länge 25 des vermessenen (Ro-tations-)Werkzeugs 1, wird - im Voreinstellgerät 3 - gespeichert, dort angezeigt und steht über eine Schnittstelle, welche das Voreinstellgerät 3 zur Verfügung stellt, anderweitig zur Verfügung.

Soll so - beispielsweise mittels Schrumpfens durch das Voreinstellgerät 3 - das (in so besagter Weise) vermessene (Ro-tations-)Werkzeug 2 - in einer vorgegebenen Sollposition, in welcher das (Rotations-)Werkzeug 2 eine bestimmte (axiale) Ausspannlänge bezüglich einer das (Rotations)Werkzeug 2 spannenden/haltenden Werkzeugaufnahme 5 aufweisen soll, in den Werkzeughalter 5 eingeschrumpft werden, so kann ein vorgesehenes Anschlagselement 26, hier ein Stift 26 (vgl. FIG 2), im Werkzeughalter 5 - entsprechend des Messergebnisses bzw. der axialen Länge 25 - positioniert werden.

Das (Rotations-)Werkzeug 2 wird dann auf Anschlag an das Anschlagselement 26 bzw. den Stift 26 in den Werkzeughalter 5 eingeführt - und so dann in der eingeführten Position im Werkzeughalter 5 eingeschrumpft.

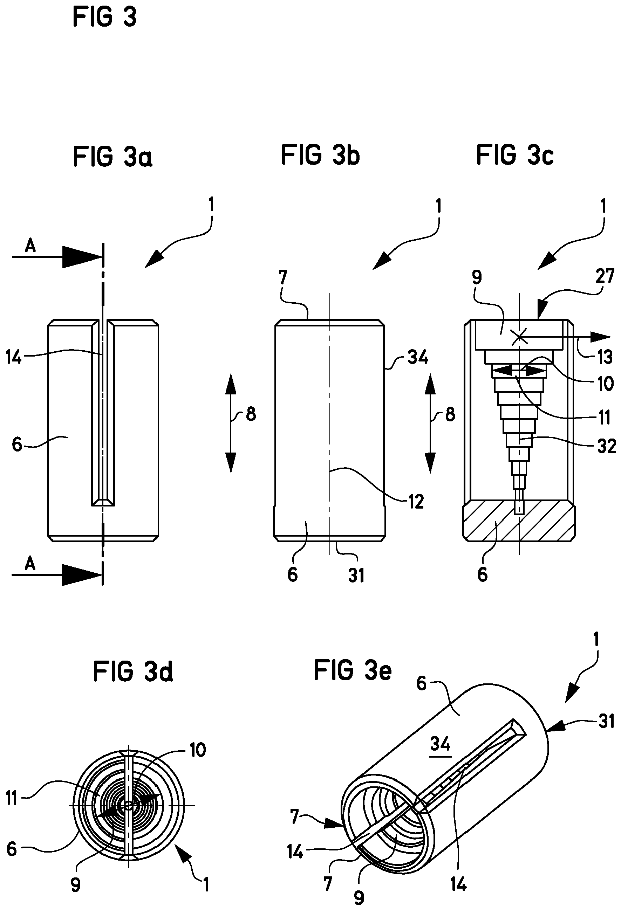

### Messhülse - mit zentrischer Ausnehmung (FIG 3 bzw. FIGen 3a bis 3e)

FIG 3 (mit den FIGen 3a bis 3e) zeigt eine Messhülse 1, wie sie bei besagter Vermessung eines zu vermessenden (Rotations-)Werkzeugs 2 bzw. bei besagtem Voreinstellgerät 3 verwendet werden kann.

Wie FIG 3 zeigt, sieht die Messhülse 1, geformt als ein hülsenförmiger bzw. zylindrischer (metallischer) Grundkörper 6, eine stufenförmige (, axial verlaufende) Ausnehmung 9 (in der Messhülse 1) vor, deren kreisscheibenförmige Ausnehmungsstufen 11 jeweils gleichen Durchmesser/Querschnitts 10 jeweils konzentrisch zu der Mittelachse 12 der Messhülse 1 angeordnet sind.

Vereinfacht und anschaulich ausgedrückt, die Ausnehmung 9 bildet hier einen - konzentrisch in der Messhülse 1 ausgebildeten - auf den Kopf stehenden, geraden (axialen) Stufenkegel 32, welcher - beginnend von/an der (ersten) oberen Stirnseite 7 der Messhülse 1 - (im Inneren der Messhülse 1) bis nahe an die (zweite) untere Stirnseite 31 der Messhülse 1 reicht.

Wie weiter FIG 3 zeigt, sieht die Messhülse 1 weiter einen sich radial 13 durch die Messhülse 1 hindurch erstreckenden, durch die Mittelachse 12 der Messhülse 1 verlaufenden Durchlichtschlitz 14 vor, welcher sich von der oberen Stirnseite 7 der Messhülse 1 beginnend in Axialrichtung 8 der Messhülse über den Bereich der Ausnehmung 9 erstreckt.

Wird so (bei besagter Vermessung des zu vermessenden (Rotati-ons-)Werkzeugs 2 durch das Voreinstellgerät 3 bzw. des (optischen) Messsystems 23) der Durchlichtschlitz 14 mit einem Strahlungsmedium, hier Licht, des optischen Messsystems 23 des Voreinstellgeräts 3, bestrahlt/-leuchtet bzw. durchstrahlt/-leuchtet, so kann dadurch insbesondere bestimmt werden, wo das zu vermessendes Werkzeug 2 in der Messhülse 1 bzw. in dortiger Ausnehmung 9 positioniert ist.

Insbesondere die untere, schaftseitige Stirnseite 28 bzw. das untere Ende 28 des in der Ausnehmung 9 positionierten, zu vermessenden (Rotations-)Werkzeug 2 (wie auch die obere, schneidenseitige Stirnseite 29 bzw. das obere Ende 29 des zu vermessenden (Rotations-)Werkzeugs) 2 lässt bzw. lassen sich so (bei der Vermessung des Werkzeugs 2) ermitteln. Beide axialen Enden 28, 29 des vermessenen (Rotations-)Werkzeugs 2 liefern dann dessen axiale Länge 25.

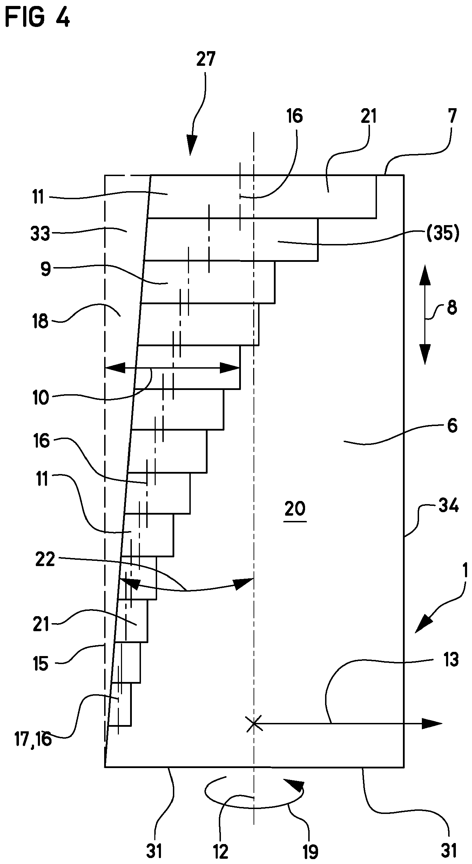

### Messhülse - mit offener, exzentrischer Ausnehmung (FIG 4)

FIG 4 zeigt (schematisch im Schnitt) eine weitere Messhülse 1, wie sie auch bei besagter Vermessung eines zu vermessenden (Rotations-)Werkzeugs 2 bzw. bei besagtem Voreinstellgerät 3 verwendet werden kann.

Wie hier FIG 4 verdeutlicht, sieht die Messhülse 1, ebenfalls wieder geformt als der hülsenförmige bzw. zylindrische (metallische) Grundkörper 6, ebenfalls eine stufenförmige (, axial verlaufende) Ausnehmung 9 (in der Messhülse 1) vor, deren wiederum kreisscheibenförmigen Ausnehmungsstufen 11 jeweils gleichen Durchmesser/Querschnitts 10 - in diesem Fall - jeweils derart exzentrisch zu der Mittelachse 12 der Messhülse 1 verschoben angeordnet sind, dass die Ausnehmungsstufen 11 eine gemeinsame Mantellinie 15 ausbilden, wobei auch die Mittelachsen 16 der kreisscheibenförmigen Ausnehmungsstufen 11 in einer gemeinsamen Ebene liegen und die gemeinsame Mantellinie 15 parallel zu der Mittelachse 12 der Messhülse 1 angeordnet ist und eine (parallele, axiale) Mantellinie 17 der Messhülse 1 berührt.

Vereinfacht und anschaulich ausgedrückt, (wohingegen - im Falle der besagten zu der Mittelachse 12 der Messhülse 1 konzentrischen kreisförmigen Ausnehmungsstufen 11 - die Ausnehmung 9 einen geraden Stufenkegel 32 bildet (vgl. FIG 3)) bildet hier die Ausnehmung 9 einen auf den Kopf stehenden, schiefen (axialen) Stufenkegel 33 aus, welcher den Mantel 34 der Messhülse 1 (innenseitig, linienförmig) berührt und ebenfalls wieder - beginnend von/an der oberen Stirnseite 7 der Messhülse 1 - (im Inneren der Messhülse 1) bis nahe an die untere Stirnseite 31 der Messhülse 1 reicht.

Wie weiter FIG 4 verdeutlicht, sieht die Messhülse 1 hier einen einstückig abtragbaren, geneigt zur Mittelachse 12 der Messhülse 1 verlaufenden Materialabtrag 18 vor, welcher sich (wieder) von der ersten Stirnseite 7 der Messhülse 1 beginnend in Axialrichtung 8 der Messhülse 1 über den Bereich der Ausnehmung 9 erstreckt - und derart ausgebildet ist, dass die Ausnehmungsstufen 11 nach abgetragenem Material 18 im Umfangsrichtung 19 nicht vollständig durch Messhülsenmaterial 20 umgeben (d.h. (anschaulich und einfach ausgedrückt) freigeschnitten) sind.

Der Neigungswinkel 22 (Zwischenwinkel 22), welchen der Materialabtrag 18 bezüglich der Mittelachse 16 der Messhülse 1 aufweist, beträgt in etwa 5°, wodurch sich bei den kreisförmigen Ausnehmungsstufen 11 (freigeschnittene) Kreisscheibensektoren 21 mit einem Mittelpunktswinkel 35 - hier - kleiner ca. 130° ergeben.

(Funktions-)Ähnlich dem besagten Durchlichtschlitz 14 (im Falle des besagten geraden Stufenkegels 32 in der Messhülse 1 (vgl. FIG 3)) kann so auch hier - wird die Messhülse 1 im Bereich ihres Materialabtrags 18 (mittels des (optischen) Messsystems 23 des Voreinstellgeräts 3) bestrahlt/-leuchtet - bestimmt werden, wo das zu vermessende (Rotations-)Werkzeug 2 in der Messhülse 1 bzw. in dortiger Ausnehmung 9 positioniert ist.

Insbesondere die untere Stirnseite 28 bzw. das untere Ende 28 des in der Ausnehmung 9 positionierten, zu vermessenden (Ro-tations-)Werkzeug 2 (wie auch die obere Stirnseite 28 bzw. das obere Ende 29 des zu vermessenden (Rotations-)Werkzeugs 2) lässt bzw. lassen sich so auch hier (bei der Vermessung des Werkzeugs 2) ermitteln. Beide axialen Enden 28, 29 des vermessenen (Rotations-)Werkzeugs 2 liefern wiederum dann dessen axiale Länge 25.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 1: Messhülse
- 2: Werkzeug, (rotationssymmetrisches) Bearbeitungswerkzeug, Fräswerkzeug
- 3: Voreinstellgerät, (kombiniertes) Voreinstell- und Schrumpfgerät
- 4: Position, (auswählbarer) Positionsort
- 5: Werkzeughalter, Werkzeugaufnahme
- 6: Grundkörper
- 7: erste, obere Stirnseite (der Messhülse 1)
- 8: Axialrichtung
- 9: Ausnehmung

- 10: Querschnitt
- 11: (Ausnehmungs-)Stufe
- 12: Mittellinie/-achse (der Messhülse 1)
- 13: Radialrichtung
- 14: Durchlichtschlitz
- 15: gemeinsame Mantellinie (der Ausnehmungsstufen 11)
- 16: Mittelachse (einer Ausnehmungsstufe 11)
- 17: (parallele) Mantellinie (der Messhülse 1)
- 18: Materialabtrag
- 19: Umfangsrichtung

- 20: Messhülsenmaterial
- 21: Kreisscheibensektor
- 22: (Neigungs-/Zwischen-)Winkel
- 23: optisches Messsystem, (optisches) Messgerät
- 24: Messbereich
- 25: axiale Länge eines Werkzeugs 2
- 26: Anschlagselement, Stift
- 27: Öffnung (der Ausnehmung 9)
- 28: schaftseitige, untere Stirnseite/-fläche bzw. Ende (des Werkzeugs 2)
- 29: schneidenseitige, obere Stirnseite/-fläche bzw. Ende (des Werkzeugs 2)
- 30: Trägersystem (des Messsystems 23)
- 31: zweite, untere Stirnseite (der Messhülse 1)
- 32: (auf den Kopf stehender, gerader (axialer)) Stufenkegel
- 33: (auf den Kopf stehender, schiefer (axialer)) Stufenkegel
- 34: Mantel (der Messhülse 1)
- 35: Mittelpunktswinkel (eines Kreisscheibensektors 21)

## Patentansprüche

1. **Messhülse** (1) zum Vermessen eines Werkzeuges (2),
aufweisend
einen, insbesondere hülsenförmigen, Grundkörper (6) mit einer von einer ersten Stirnseite (7) der Messhülse (1) beginnend in Axialrichtung (8) der Messhülse (1) verlaufenden Ausnehmung (9) mit sich stufenförmig verkleinernden, insbesondere kreisförmigen, Querschnitten (10) zum Aufnehmen eines zu vermessenden Werkzeugs (2).

2. **Messhülse** (1) zum Vermessen eines Werkzeuges (2) nach einem der voranstehenden Ansprüche,
**dadurch gekennzeichnet, dass**
die Ausnehmung (9) im Bereich einer Stufe (11) mit gleichem Querschnitt (10) im Wesentlichen kreisscheibenförmig ausgebildet ist.

3. **Messhülse** (1) zum Vermessen eines Werkzeuges (2) nach einem der voranstehenden Ansprüche,
**dadurch gekennzeichnet, dass**
die Querschnitte (10) der, insbesondere kreisscheibenförmigen, Ausnehmungsstufen (11) entsprechend von Durchmessern von Werkzeugen (2) bestimmt und/oder angepasst sind.

4. **Messhülse** (1) zum Vermessen eines Werkzeuges (2) nach einem der voranstehenden Ansprüche,
**dadurch gekennzeichnet, dass**
die, insbesondere kreisscheibenförmigen, Ausnehmungsstufen (11) jeweils konzentrisch zu einer Mittelachse (12) der Messhülse (1) angeordnet sind.

5. **Messhülse** (1) zum Vermessen eines Werkzeuges (2) nach einem der voranstehenden Ansprüche,
ausgebildet
mit einem, insbesondere sich radial (13) durch die Messhülse (1) hindurch erstreckenden und/oder insbesondere durch eine Mittelachse (12) der Messhülse (1 verlaufenden, Durchlichtschlitz (14), welcher sich von der ersten Stirnseite (7) der Messhülse (1) beginnend in Axialrichtung (8) der Messhülse (1) zumindest über den Bereich der, insbesondere konzentrisch zu einer Mittelachse (12) in der Messhülse (1) angeordneten, Ausnehmung (9) erstreckt.

6. **Messhülse** (1) zum Vermessen eines Werkzeuges (2) nach einem der voranstehenden Ansprüche,
**dadurch gekennzeichnet, dass**
die, insbesondere kreisscheibenförmigen, Ausnehmungsstufen (11) jeweils derart exzentrisch zu einer Mittelachse (12) der Messhülse (1) verschoben angeordnet sind, dass die Ausnehmungsstufen (11) eine gemeinsame Mantellinie (15) ausbilden und/oder die Mittelachsen (16) der Ausnehmungsstufen (11) in einer gemeinsamen Ebene liegen.

7. **Messhülse** (1) zum Vermessen eines Werkzeuges (2) nach einem der voranstehenden Ansprüche,
**dadurch gekennzeichnet, dass**
die, insbesondere kreisscheibenförmigen, Ausnehmungsstufen (11) jeweils derart exzentrisch zu einer Mittelachse (12) der Messhülse (1) verschoben angeordnet sind, dass die gemeinsame Mantellinie (15) parallel zu der Mittelachse (12) der Messhülse (1) angeordnet ist, wobei insbesondere ein Abstand zwischen der gemeinsamen Mantellinie (15) und der Mittelachse (12) im Wesentlichen gleich ist wie ein Abstand zwischen der Mittelachse (12) der Messhülse (1) und einer zu der gemeinsamen Mantellinie (15) parallelen Mantellinie (17) der Messhülse (1).

8. **Messhülse** (1) zum Vermessen eines Werkzeuges (2) nach einem der voranstehenden Ansprüche,
ausgebildet
mit einem, insbesondere einstückig abtragbaren, Materialabtrag (18) bei der die Ausnehmung (9) mit den exzentrischen Ausnehmungsstufen (11) aufweisenden Messhülse (1), welcher Materialabtrag (18) sich von der ersten Stirnseite (7) der Messhülse (1) beginnend in Axialrichtung (8) der Messhülse (1) zumindest über den Bereich der Ausnehmung (9) erstreckt und derart ausgebildet ist, dass die Ausnehmungsstufen (11) nach abgetragenem Material (18) im Umfangsrichtung (19) nicht vollständig durch Messhülsenmaterial (20) umgeben sind.

9. **Messhülse** (1) zum Vermessen eines Werkzeuges (2) nach einem der voranstehenden Ansprüche,
**dadurch gekennzeichnet, dass**
der Bereich einer Ausnehmungsstufe (11), der nicht durch Messhülsenmaterial (20) umgeben ist, ein Kreisscheibensektor (21) mit einem Mittelpunktswinkel (35) kleiner 180°, insbesondere kleiner 150°, insbesondere kleiner 130°, insbesondere in einem Bereich von [30°, 180°], [30°, 150°], [30°, 130°], [45°, 180°], [45°, 150°] oder [45°, 130°], ist und/oder der, insbesondere einstückig abtragbare, Materialabtrag (18) gegenüber der Mittellinie (12) der Messhülse (1) unter einem Winkel (22) von ca. 5° geneigt abgetragen ist.

10. **Werkzeugvoreinstellgerät** (3)
aufweisend
eine Messhülse (1) nach einem der voranstehenden Ansprüche.

11. **Werkzeugvoreinstellgerät** (3) nach einem der voranstehenden Ansprüche,
aufweisend
ein optisches Messsystem (23) und einen auswählbaren Positionsort (4) für die Messhülse (1), welcher derart auswählbar ist, dass die Ausnehmung (9) einer an dem auswählbaren Positionsort (4) positionierten Messhülse (1) durch das, gegebenenfalls in einem Messbereich (24) bewegbare, optische Messsystem (23) fokussierbar ist.

12. **Verfahren** zum Vermessen eines Werkzeugs (2) mittels eines Werkzeugvoreinstellgeräts (3) mit einem optischen Messsystem (23) zum Vermessen von Werkzeugen (2) und einer Messhülse (1) nach einem der voranstehenden Ansprüche
bei dem
unter Verwendung des optischen Messsystems (23) ein in der Messhülse (1) bzw. in der Ausnehmung (9) der Messhülse (1) angeordnetes Werkzeug (2) vermessen wird.

13. **Verfahren** zum Vermessen eines Werkzeugs (2) nach einem der voranstehenden Verfahrensansprüche,
**dadurch gekennzeichnet, dass**
die Messhülse (1) an einem auswählbaren Positionsort (4) bei dem Werkzeugvoreinstellgerät (3) positioniert wird, das zu vermessende Werkzeug (2) in der Ausnehmung (9) der Messhülse (1) positioniert wird, das optische Messsystem (23) des Werkzeugvoreinstellgeräts (3) gegebenenfalls in eine Messposition bewegt wird, in welcher die Ausnehmung (9) der Messhülse (1) fokussierbar ist, das in der Ausnehmung (9) der Messhülse (1) positionierte Werkzeug (2) unter Verwendung des optischen Messsystems (23) fokussiert und vermessen wird.

14. **Verfahren** zum Vermessen eines Werkzeugs (2) nach einem der voranstehenden Verfahrensansprüche,
**dadurch gekennzeichnet, dass**
das zu vermessende Werkzeug (2) ein rotationssymmetrisches Bearbeitungswerkzeug (2), insbesondere ein Fräswerkzeug (2), ist.

15. **Verfahren** zum Montieren eines Werkzeugs (2) in einem Werkzeughalter (5),
bei dem
das Werkzeug (2) nach einem der voranstehenden Verfahrensansprüche vermessen wird, insbesondere eine axiale Werkzeuglänge (25) des Werkzeugs (2) gemessen wird, ein Anschlagselement (26) im Werkzeughalter (5) unter Verwendung des Messergebnisses, insbesondere der axialen Länge (25), positioniert wird, das Werkzeug (2) auf Anschlag an das Anschlagselement (26) in den Werkzeughalter (5) eingeführt wird und das Werkzeug (2) in der eingeführten Position im Werkzeughalter (5) befestigt wird.
